# EUROPÄISCHE PATENTSCHRIFT

(11) **EP 1 598 303 B1**
(45) Veröffentlichungstag und Bekanntmachung des Hinweises auf die Patenterteilung: **21.11.2012**
(21) Anmeldenummer: 05010765.5
(22) Anmeldetag: 18.05.2005
(51) Int. Cl.: B66C 13/16, B66C 23/82, B66C 23/72, B66C 23/78, B66C 13/46

(54) **Mobilkran**
Mobile Crane
Grue mobile

(30) Priorität: 19.05.2004 DE 202004008083 U
(43) Veröffentlichungstag der Anmeldung: 23.11.2005
(73) Patentinhaber: Liebherr-Werk Ehingen GmbH, 89584 Ehingen/Donau (DE)
(72) Erfinder: Morath, Erwin, 89584 Lauterach (DE)
(74) Vertreter: Laufhütte, Dieter

(56) Entgegenhaltungen:
- WO-A2-92/06349
- DE-C1- 19 830 981
- JP-A- 7 168 985
- US-A- 6 061 617

## Beschreibung

Die Erfindung betrifft einen Mobilkran mit einem Teleskopausleger, der einen Anlenkschuss und zumindest einen daraus austeleskopierbaren Teleskopschuss aufweist, oder einen Raupenkran.

Bei konventionell eingesetzten Mobilkränen bzw. Raupenkränen werden eine Reihe von Daten in der Steuer- und Überwachungselektronik erfasst. Hier handelt es sich beispielsweise um Daten bezüglich der Rüstzustände, des aufgelegten Gegengewichts, der Ausfahrposition der Stützfüße und vielem anderen. Die jeweiligen Daten werden durch unterschiedliche Erkennungssysteme erfasst und teilweise automatisch, teilweise aber auch manuell eingegeben. So wird beispielsweise der jeweilige Rüstzustand des Auslegers üblicherweise vom Bedienpersonal händisch in den Computer eingegeben. Der Computer rechnet hier dann anhand der entsprechend eingegebenen Werte mögliche maximale Lastaufnahmen aus.

In einem anderen Anwendungsfall wird die Ausfahrposition der Abstützfüße durch eine entsprechende Sensorik erfasst. Hier wird beispielsweise die Länge eines ablaufenden Maßbandes erfasst, das am austeleskopierbaren Fußende befestigt ist und mit diesem ein- und ausgezogen wird.

WO 92/06349 offenbart einen Mobilkran gemäß dem Oberbegriff des Anspruchs 1.

Aufgabe der Erfindung ist es, einen Mobilkran bzw. Raupenkran mit einer Zustands- bzw. Positionserkennungseinrichtung an die Hand zu geben, die vordefinierte Zustände bzw. Positionen eindeutig erkennt und sicher an die Steuerelektronik weitergibt.

Erfindungsgemäß wird diese Aufgabe mittels eines Mobilkrans bzw. Raupenkrans nach dem Oberbegriff des Anspruchs 1 durch die Kombination mit den Merkmalen des kennzeichnenden Teils des Anspruchs 1 gelöst. Demnach wird bei einem Mobilkran, der üblicherweise einen Teleskopausleger mit einem Anlenkschuss und zumindest einem daraus austeleskopierbaren Teleskopschuss aufweist, bzw. bei einem Raupekran als Positionserkennungsvorrichtung zumindest ein Signalgeber in Form eines induktiv wirkenden Transponders, eine Empfangseinheit zur Erfassung der Position des Signalgebers, eine Steuereinrichtung zur Ansteuerung in Abhängigkeit eines Signals der Empfangseinheit, sowie eine Signalübertragungseinrichtung in Form eines Datenbusses zur Übertragung der Signaldaten von der Empfangseinheit zur Steuereinrichtung eingesetzt.

Entsprechend induktiv wirkende Transponder mit Empfangseinheiten werden üblicherweise auch als RFID-Systeme, d. h. Radio Frequency Identification Systeme, bezeichnet. Derartige RFID-Systeme sind grundsätzlich schon in den verschiedensten Anwendungsbereichen bekannt. Diese RFID-Systeme weisen einen Transponder auf, der induktiv bei Anregung durch entsprechende Signale Informationen als RF-Signal an eine Empfangseinheit abgibt. Die Empfangseinheit, die auch als Reader bezeichnet wird, enthält eine digitale Elektronik, die den Transponder derart ansteuert, dass er auf ihm abgelegte Informationen als modulierte RF-Signale zurücksendet. Diese vom Transponder empfangenen Informationen werden in der hier vorliegenden Erfindung über einen Datenbus der Steuereinrichtung des Mobilkrans zugeführt. Eine derartig erfindungsgemäße Zustands- und Positionserkennungseinrichtung lässt sich im Mobilkran in unterschiedlichen Positionen einsetzen.

Da es in einem Mobilkran von besonderer Bedeutung ist, dass die derartigen Erkennungseinrichtungen fehlerfrei funktionieren, ist zur Selbstüberprüfung der Funktionsfähigkeit der Empfangseinheit in dieser gemäß einer vorteilhaften Ausgestaltung der Erfindung ein Transponder fest eingebaut, der ein vorbestimmtes Funktionssignal zur kontinuierlichen Überprüfung der Funktionsfähigkeit der Positionserkennungsvorrichtung abgibt. Sollte hier also das bestimmte vom fest zugeordneten Transponder abgegebene Signal nicht mehr empfangen werden, wird im Steuercomputer ein Störfall-Signal erzeugt, so dass beim Betrieb des Mobilkrans diese Fehlfunktion nicht mehr verborgen bleiben kann.

Weitere bevorzugte Ausgestaltungen der Erfindung ergeben sich aus den weiteren sich an den Hauptanspruch anschließenden Unteransprüchen.

Gemäß einer besonders vorteilhaften Ausführungsvarianten kann die Positionserkennungseinrichtung bei einem Abspannseil in Form einer Seillängen-Einstellvorrichtung einsetzbar sein. Diese Längen-Einstellvorrichtung weist eine Seilhaltevorrichtung zur Einstellung einer gewünschten Seillänge des Abspannseils auf, wobei die Seillängen-Einstellvorrichtung zumindest einen am Abspannseil befestigten Signalgeber aufweist, dessen Positionen von der Empfangseinheit erfassbar ist und wobei die Steuereinrichtung die Seilhaltevorrichtung in Abhängigkeit eines Signals der Empfangseinheit 1 ansteuert.

Vorteilhaft kann der Mobilkran bzw. Raupenkran eine Abspannung für den Teleskopausleger aufweisen, die zumindest eine an einem der Schüsse gelagerte Abspannstütze, ein von der Abspannstütze abgestütztes Abspannseil sowie eine Seillängen-Einstellvorrichtung nach der zuvor beschriebenen Lösung aufweist.

Die Empfangseinheit kann an der Abspannstütze angeordnet sein. Vorteilhaft kann eine Seilwinde zum Einholen des Abspannseiles vorgesehen sein, die vorzugsweise an der Abspannstütze angeordnet ist, und in Abhängigkeit des Signals der Empfangseinheit ansteuerbar ist. Diese Seilwinde kann die Seilhaltevorrichtung bilden.

Der mindestens eine Signalgeber kann in einem auf dem Abspannseil sitzenden Ring integriert sein. Ein derartiger Ring kann auf das Seil an vor bestimmter Position aufgepresst werden.

Vorteilhaft können zwei Abspannstützen vorgesehen sein, die in einer Betriebsstellung V-förmig aufgespreizt sind, und über jede Abspannstütze kann ein Abspannseil laufen, wobei an jedem Abspannseil vorzugsweise an jeweils gleichen Seillängen der Abspannseile entsprechenden Seilabschnitten Signalgeber befestigt sind. Aufgrund der hier vorgesehenen Positionserkennungseinrichtung kann durch Überfahren der entsprechenden Transponder über die Empfangseinrichtungen genau festgestellt werden, wie weit das jeweilige Abspannseil gespannt ist, so dass hierdurch die genaue und symmetrische Positionierung der Abspannstützen einstellbar ist.

Eine andere bevorzugte Ausgestaltung der Erfindung besteht darin, dass an mindestens einem Ballastelement ein Signalgeber angeordnet ist, von dem ein dem Ballast entsprechendes Signal an eine Empfangseinheit übertragbar ist.

Die Empfangseinheit kann in einen Bereich des Mobilkranchassis, auf dem das mindestens eine Gewicht ablegbar ist, integriert sein. Es können auch mehrere Empfangseinrichtungen an entsprechenden Positionen des Mobilkranchassis angeordnet sein, die dann nach entsprechendem Ablegen von Gewichten mit zugeordneten Transpondern kommunizieren können. Alternativ gemäß einer nicht beanspruchten Ausführungsvariante kann eine Empfangseinrichtung auch in einem tragbaren Gerät angeordnet sein, das vom Bedienungspersonal entlang der abgelegten Gewichte geführt wird, um die entsprechenden Daten von den jeweiligen Transpondern der Gewichte aufzunehmen. Diese Daten können dann beispielsweise über eine Funkverbindung in die Steuereinrichtung des Mobilkrans eingegeben werden.

Die Empfangseinheit kann auch in einem Bereich des Kranauslegers angeordnet sein, an den das mindestens eine Gewicht anhängbar ist. Hier wird nach entsprechendem Aufhängen der Gewichte mit den zugeordneten Transpondern kommuniziert. Diese Daten können, wie zuvor schon beschrieben, in die Steuereinrichtung des Mobilkrans übertragen werden, so dass hier die genaue Ballastierung des Auslegers erfassbar ist.

Gemäß einer anderen vorteilhaften Ausgestaltung der Erfindung können an den ausfahrbaren Abstützfüßen des Mobilkrans Signalgeber angeordnet sein, wobei am Fahrzeugchassis entsprechende Empfangseinheiten angeordnet sind. Vorteilhaft sind dabei an jedem Stützfuß an vorbestimmten Positionen Signalgeber, d. h. Transponder, angeordnet, so dass durch die jeweilige Empfangseinheit die genaue Position des Abstützfußes bestimmbar ist. Dabei ist die Position sowohl hinsichtlich der horizontal zum Fahrzeug ausfahrbaren Schiebeholme und hinsichtlich der vertikal ausfahrbaren Abstützfüße genau bestimmbar. Zusätzlich kann an jedem Abstützfuß messbar sein, ob er unter Last steht.

Eine weitere bevorzugte Ausgestaltung der Erfindung betrifft eine Rüstelementerkennung, beispielsweise von Gitterelementen eines Derrickauslegers. Hier ist an den jeweiligen Rüstelementen jeweils ein Signalgeber, d. h. Transponder, angeordnet. Nach entsprechendem Zusammenbau der einzelnen Rüstelemente kann der Rüstzustand dann durch Auslesen der Signale aus den Transpondern bestimmt werden. Hierzu können vorteilhaft an den benachbarten Elementen Empfangseinheiten angeordnet sein, die über ein Bussystem mit dem Steuerrechner des Mobilkrans verbunden sind. Anhand der entsprechenden Rüstzustandsdaten kann in dem Steuerrechner die genaue geometrische Konfiguration bestimmt werden. Hierdurch können Gewichtsverteilungen innerhalb des Auslegers in einfacher Weise mit großer Präzision berechnet werden.

Wiederum eine andere Ausführungsvariante der Erfindung beinhaltet einen mobilen Signalgeber, der mit einer Empfangseinheit, die an einer bestimmten Position am Mobilkran angeordnet ist, zusammenwirkt, um eine sichere Position einer Bedienperson zu erkennen und vorbestimmte Aktionen des Mobilkranes freizugeben. Hierdurch wird die Arbeitssicherheit der Bedienpersonen wesentlich erhöht. Früher bestand das Problem, dass beispielsweise bei einer Fernsteuerung des Krans die Bedienperson durch ein- bzw. ausfahrende Abstützfüße erfasst und verletzt werden konnten. Dadurch, dass die Bedienperson über den Transponder bzw. Signalgeber im Nahbereich einer Empfangseinheit stehen muss, kann nun bei entsprechender Anordnung der Empfangseinheit sichergestellt werden, dass die Bedienperson außerhalb des Gefahrenbereichs steht. Nur in diesem entsprechend definierten Bereich wird in dem hier dargestellten Ausführungsbeispiel die Fernsteuerung freigegeben. Das bedeutet, dass die Bedienperson in einem Bereich, in dem der von ihr getragene Signalgeber mit der Empfangseinheit keine Daten austauscht, die blokkierte Fernsteuerung nicht bedienen kann. Erst im Bereich, in dem der Signalgeber seine Daten an die Empfangseinheit überträgt, ist die Fernsteuerung freigegeben und damit die Sicherheit der Bedienperson gewährleistet.

Weitere Einzelheiten und Vorteile der Erfindung ergeben sich aus einem in der Zeichnung dargestellten Ausführungsbeispiel. Es zeigen:
- Fig. 1:: eine schematische perspektivische Gesamtansicht eines Mobilkrans mit einer seitlichen Abspannung nach einer bevorzugten Ausführung der Erfindung,
- Fig. 2:: eine ausschnittsweise Draufsicht auf den Teleskopausleger und dessen seitliche Abspannung des Mobilkrans aus Fig. 1,
- Fig. 3:: eine schematische Detailansicht einer Gewichtsablage auf einem Unterwagen eines Mobilkrans,
- Fig. 4:: eine schematische Ansicht eines teilweise ausgefahrenen Abstützfußes eines Mobilkrans,

- Fig. 5:: eine schematische Draufsicht von oben auf einen Teil des Unterwagens mit teilweise ausgefahrenen Abstützfüßen und
- Fig. 6 und 7:: unterschiedliche Rüstzustände von anbaubaren Gitterauslegern.

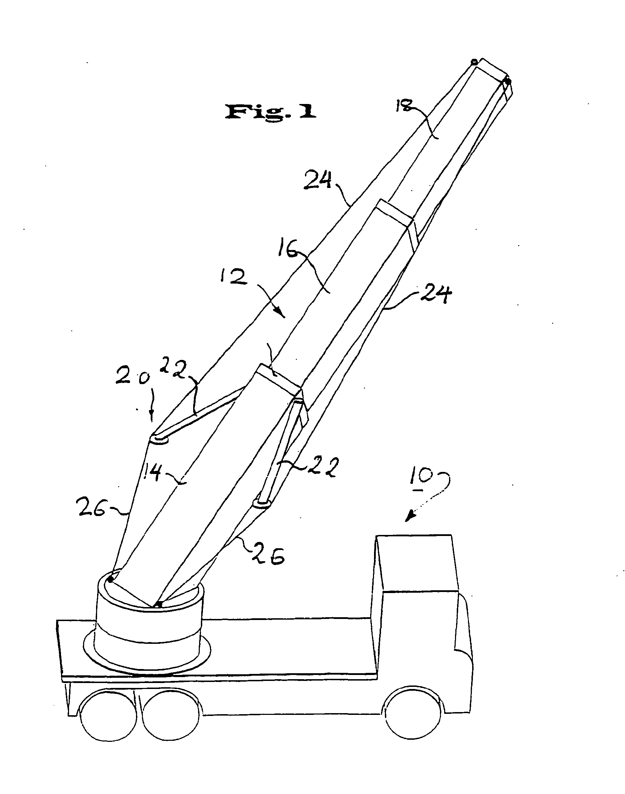

Fig. 1 zeigt einen Mobilkran 10 mit einem Teleskopausleger 12, der an dem Fahrzeug um eine aufrechte Drehachse drehbar und um eine waagerechte Achse wippbar angelenkt ist. Der Teleskopausleger 12 besitzt einen Anlenkschuss 14, der in der genannten Weise an dem Fahrzeug angelenkt ist, sowie weitere Teleskopschüsse 16 und 18, die aus dem Anlenkschuss 14 austeleskopierbar sind. Eine Abspannung 20 des Teleskopauslegers 12 ist über ein Paar Abspannstützen 22 geführt. Abspannseile 24 führen von dem freien Ende der Abspannstützen 22 zur Spitze des Teleskopauslegers 12, wobei es selbstverständlich auch möglich ist, die Abspannseile 24 beispielsweise am Kopf des mittleren Teleskopschusses 16 zu führen. Die Abspannstützen 22 sind wiederum über Abspannseile 26 im Bereich des Anlenkendes des Anlenkschusses 14 abgefangen.

Die Abspannstützen 22 sind an den Kopf des Anlenkschusses 14 beweglich angelenkt, und zwar derart, dass sie in einer Transportstellung an dem Anlenkschuss 14 angeklappt sind, während sie in einer Betriebsstellung in der gezeigten Art und Weise V-förmig aufgespreizt sind.

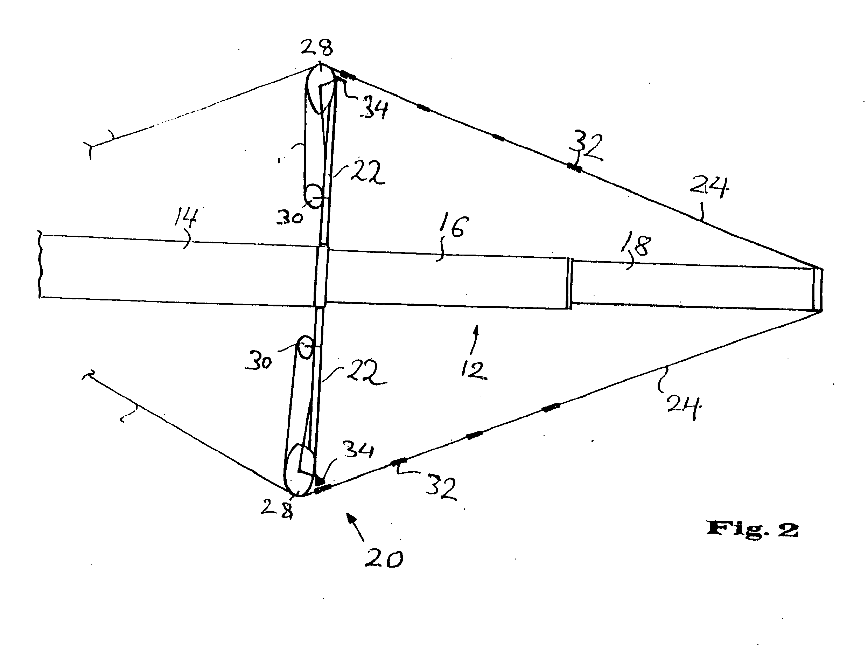

Wie in Fig. 2 gezeigt, können die Abspannstützen 22 an ihrem Kopf jeweils eine Umlenkrolle 28 besitzen, über die die an der Auslegerspitze angeschlagenen Abspannseile 24 geführt sind. Die Abspannseile 24 laufen über Seilwinden 30 auf, die jeweils an einer der Abspannstützen 22 gelagert sind. Die Seilwinden 30 dienen einerseits als Seilspeicher und andererseits dem Spannen und Festhalten des Abspannseils.

Auf den Abspannseilen 24 sind mehrere Signalgeber bzw. Transponder 32 befestigt, wobei sie in der hier dargestellten Ausführungsform als Ringe bzw. Hülsen ausgebildet sind, die auf dem Außenumfang des jeweiligen Abspannseiles 24 an bestimmt vorgegebenen Positionen sitzen. Die Transponder 32 sind voneinander beabstandet, um unterschiedliche Seillängen einstellen zu können. Die Abstände der Transponder 32 vom Anschlagpunkt des Abspannseiles 24 an der Spitze des Teleskopauslegers 12 sind dabei paarweise gleich, so dass die Seillängen der rechten und der linken Abspannung identisch einstellbar sind.

Um die Position der Transponder 32 zu erfassen und damit die effektive Seillänge zwischen Abspannstütze 22 und Anschlagpunkt des Abspannseiles 24 am Ausleger bestimmen zu können, sind an jeder Abspannstütze 22 Empfangseinheiten 34 angeordnet. Das System Signalgeber 32 und Empfangseinheit 34 ist ein im Stand der Technik als solches bekanntes System bestehend aus Transponder 32 und Reader 34 eines RFID-Systems (Radio Frequency Identification-System). Derartige auf dem physikalischen Prinzip der Induktion beruhende Systeme sind an sich bereits bekannt. In den entsprechenden Transpondern 32 sind im hier dargestellten Beispiel die genauen Informationen der Seilpositionen, an denen diese angeordnet sind, gespeichert. Diese werden dann beim entsprechenden Vorbeigleiten während des Spannens des Abspannseils 24 an der Empfangseinheit 34 ausgelesen.

Beim Abspannen des Teleskopauslegers kann hier wie folgt vorgegangen werden. Beim Ausfahren der Teleskopschüsse 16 und 18 des Teleskopauslegers 12 werden die Seilwinden 30 auf Ausziehen geschaltet, so dass die Abspannseile 24 beim Ausschieben der Teleskopschüsse 16 und 18 von den Seilwinden 30 ablaufen können. Erreichen die Teleskopschüsse 16 und 18 ihre ausgefahrene Stellung, können sie miteinander verriegelt werden. Sodann werden die Abspannseile 24 über die Seilwinden 30 gespannt. Hierbei werden die Abspannseile 24 ein Stück weit eingeholt, bis der entsprechende Signalgeber 32 eine vorgegebene Position erreicht, die von der Empfangseinheit 34 erfasst wird. In Abhängigkeit des entsprechenden Signals der Empfangseinheit 34 stoppt die Steuereinheit die Seilwinden 30 und verriegelt diese, so dass das Abspannseil in der entsprechenden Stellung gehalten wird.

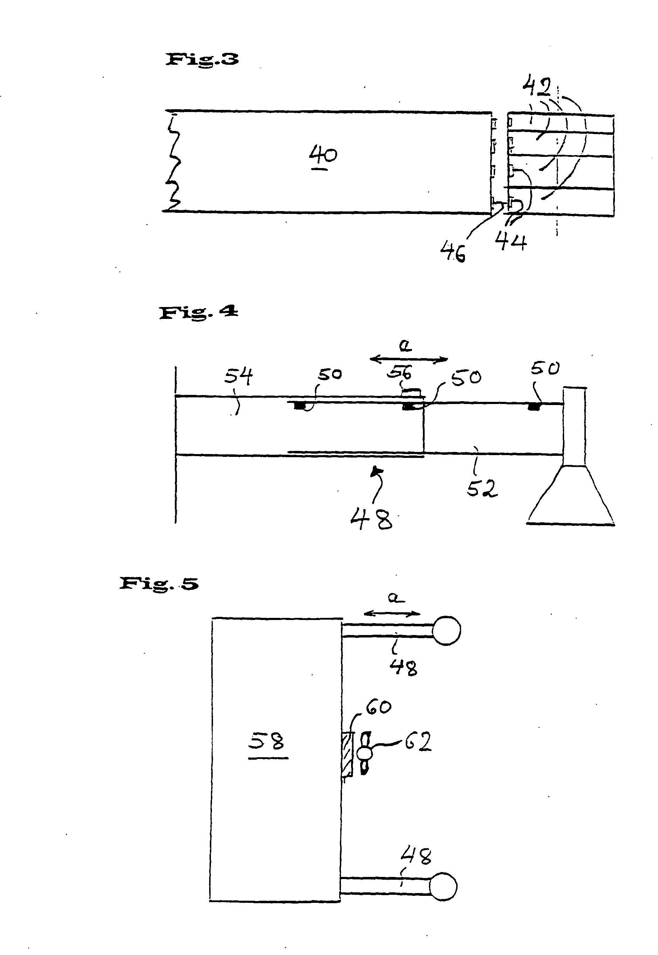

Ein weiteres erfindungsgemäßes Ausführungsbeispiel ist in Fig. 3 gezeigt. Hier ist rein schematisch die Teilansicht einer Gewichtsablage auf einem Unterwagen eines Mobilkrans gezeigt. Rein schematisch ist hier ein Teil des Unterwagens 40 eines nicht näher dargestellten Mobilkrans angedeutet, auf dem Ballastgewichte 42 abgelegt sind. Die Ballastgewichte 42 wiesen jeweils integrierte Transponder 44 auf, die im hier vorliegenden Ausführungsbeispiel mit Empfangseinrichtungen 46 kommunizieren, die an entsprechenden Stellen des Unterwagens 40 angeordnet sind. Von den Empfangseinrichtungen wird in hier nicht näher dargestellter Art und Weise das entsprechend empfangene Signal an die zentrale Steuereinheit des Mobilkrans weitergeleitet, wo die Daten verarbeitet werden.

In der Fig. 4 ist die schematische Ansicht eines teilweise ausgefahrenen Abstützfußes 48 eines Mobilkranes gezeigt. Der Abstützfuß 48 kann in Doppelpfeilrichtung a eingezogen bzw. ausgefahren werden. Die Position des Abstützfußes 48 wird durch Transponder 50, die an vorbestimmten Positionen des austeleskopierbaren Teils 52 des Abstützfußes 48 angeordnet sind, bestimmt. Hierzu wirken die Transponder 50 mit der am feststehenden Teil 54 des Abstützfußes 48 angeordneten Empfangseinrichtung 56 zusammen. Die entsprechende Position des Abstützfußes kann nach empfangenem Transpondersignal wieder über ein hier nicht näher dargestelltes Bussystem dem Steuerrechner des Mobilkrans zugeführt werden.

Eine weitere Anwendung der vorliegenden Erfindung ergibt sich aus dem Anwendungsbeispiel gemäß Fig. 5.

Dort ist das Chassis 58 eines Mobilkrans schematisch dargestellt, an welchem zur Vereinfachung nur zwei seitliche Abstützfüße 48 angedeutet sind, die wiederum in Doppelpfeilrichtung a ein- bzw. austeleskopierbar sind. Zentral im Bereich des Fahrzeugchassis 58 ist eine Empfangseinrichtung 60 gezeigt, die mit einem hier nicht näher dargestellten Transponder zusammenwirkt, der von einer Bedienperson 62 getragen wird. Der Transponder wird beispielsweise dadurch getragen, dass die Bedienperson eine Fernsteuereinrichtung zum Fernsteuern der verschiedenen Funktionen des Mobilkranes mit sich trägt. Sobald der von der Bedienperson getragene Transponder im Bereich der Empfangseinrichtung 60 ist, werden die Fernsteuerungsfunktionen freigegeben, so dass beispielsweise die Abstützfüße 48 in Pfeilrichtung a ausgefahren bzw. eingefahren werden können. Hierdurch wird sicher verhindert, dass die Bedienperson sich in einem gefährlichen Bereich befindet, d. h. beispielsweise in einem Bereich, in welchem sie von den eingefahrenen bzw. ausgefahrenen Abstützfüßen 48 erfasst würde.

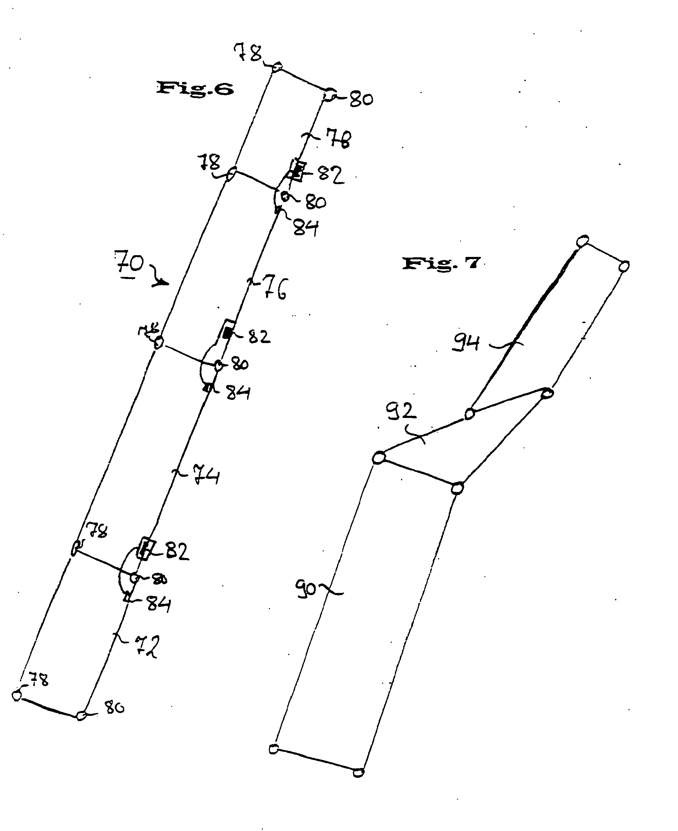

In Fig. 6 ist eine weitere Anwendungsmöglichkeit der Erfindung im Rahmen einer Buszustandserkennung beispielhaft gezeigt. Hier ist ein Gittermast 70 beispielsweise eines anbaubaren Derrickauslegers gezeigt, der aus vier Einzelelementen 72, 74, 76 und 78 besteht. Jedes dieser Elemente hat eine andere geometrische Konfiguration und einen anderen Schwerpunkt. An entsprechenden Verbolzungspunkten 78 bzw. 80 sind die entsprechenden Gitterelemente 72, 74, 76 und 78 miteinander verbindbar. Mit einem erfindungsgemäßen RFID-System kann über Transponder 82, die den jeweiligen Gitterelementen 74, 76 und 78 zugeordnet sind die entsprechenden Daten der entsprechenden Gitterelemente 74, 76 und 78 einer jeweils benachbart angeordneten Empfangseinrichtung 84, die im hier dargestellten Ausführungsbeispiel jeweils in den Gitterelemente 72, 74 und 76 angeordnet sind, übertragen werden. Von den Empfangseinrichtungen 84 werden die entsprechenden Daten über einen hier nicht näher dargestellten Bus dem Steuersystem des Mobilkrans zugeführt. Nach entsprechendem Zusammenbau kann also automatisch der aktuelle Buszustand genau erkannt werden. Die Transponder 82 wirken hier mit benachbarten Empfangselementen 84 zusammen, die in dem jeweils benachbarten Gitterelement angeordnet sind. Dabei ist die jeweilige Anordnung der Transponder 82 bzw. der Empfangselemente 84 im hier dargestellten Ausführungsbeispiel genormt. An den Übergangsstellen der Gitterelemente sind steckbare Übergänge für den Bus, über welchen die Signale weitergeleitet werden, zugeordnet.

In Fig. 7 ist eine nicht im einzelnen Detail dargestellte Rüstzustandserkennung integriert, die zur Erkennung der Geometriekonfiguration bei aus verschiedenen geometrisch aufgebauten Gitterelementen, wie sie hier anhand der Gitterelemente 90, 92 und 94 dargestellt sind, dienen. Hier wird also durch die jeweiligen den Gitterelementen 90, 92 und 94 zugeordneten Transponder durch Übermittlung der entsprechenden Datensätze an die Systemsteuerung automatisch die Geometrie des zusätzlich eingebauten Gitterauslegers ermittelt.

Die in den Ausführungsbeispielen anhand eines Teleskopkrans beispielhaft dargestellten Einzelheiten und Merkmale der Erfindung können in gleicher Weise bei einem Raupenkran Verwendung finden.

## Patentansprüche

1. Mobilkran mit einem Teleskopausleger (12), der einen Anlenkschuss (14) und zumindest einen daraus austeleskopierbaren Teleskopschuss (16,18) aufweist, oder Raupenkran,
**dadurch gekennzeichnet,**
**dass** er als Positionserkennungseinrichtung zumindest einen Signalgeber in Form eines induktiv wirkenden Transponders (32,50;82), eine Empfangseinheit (34,56,60.87) zur Erfassung der Position des Signalgebers, eine Steuereinrichtung zur Ansteuerung in Abhängigkeit eines Signals der Empfangseinheit, sowie eine Signal-übertragungseinrichtung in Form eines Datenbusses zur Übertragung der Signaldaten von der Empfangseinheit zur Steuereinrichtung aufweist.

2. Mobilkran nach Anspruch 1, **dadurch gekennzeichnet, dass** in der Empfangseinheit ein Transponder fest eingebaut ist, der ein vorbestimmtes Funktionssignal zur kontinuierlichen Überprüfung der Funktionsfähigkeit der Positionserkennungsvorrichtung abgibt.

3. Mobilkran nach Anspruch 1 oder 2, **dadurch gekennzeichnet, dass** er mindestens ein Abspannseil sowie eine Seillängen-Einstellvorrichtung mit einer Seilhaltevorrichtung zur Einstellung einer gewünschten Seillänge des Abspannseiles aufweist, wobei die Seillängen-Einstellvorrichtung zumindest einen am Abspannseil befestigten Signalgeber aufweist, dessen Position von der Empfangseinheit erfassbar ist, und wobei die Steuereinrichtung die Seilhaltevorrichtung in Abhängigkeit eines Signals der Empfangseinheit ansteuert.

4. Mobilkran nach Anspruch 3, **dadurch gekennzeichnet, dass** er eine Abspannung für den Teleskopausleger aufweist, die zumindest eine an einem der Schüsse gelagerte Abspannstütze, ein von der Abspannstütze abgestütztes Abspannseil sowie eine Seillängen-Einstellvorrichtung nach dem vorangehenden Anspruch aufweist.

5. Mobilkran nach Anspruch 4, **dadurch gekennzeichnet, dass** die Empfangseinheit an der Abspannstütze angeordnet ist.

6. Mobilkran nach einem der vorhergehenden Ansprüche, **dadurch gekennzeichnet, dass** eine Seilwinde zum Einholen des Abspannseiles vorgesehen, vorzugsweise an der Abspannstütze angeordnet ist, und in Abhängigkeit des Signals der Empfangseinheit ansteuerbar ist.

7. Mobilkran nach einem der Ansprüche 3 bis 6, **dadurch gekennzeichnet, dass** die Seilwinde die Seilhaltevorrichtung bildet.

8. Mobilkran nach einem der Ansprüche 3 bis 7, **dadurch gekennzeichnet, dass** der mindestens eine Signalgeber in einem auf dem Abspannseil sitzenden Ring integriert ist.

9. Mobilkran nach einem der vorhergehenden Ansprüche, **dadurch gekennzeichnet, dass** zwei Abspannstützen vorgesehen sind, die in einer Betriebsstellung V-förmig aufgespreizt sind, und über jede Abspannstütze ein Abspannseil läuft, wobei an jedem Abspannseil vorzugsweise an jeweils gleichen Seillängen der Abspannseile entsprechenden Seilabschnitten Signalgeber befestigt sind.

10. Mobilkran nach einem der vorhergehenden Ansprüche, **dadurch gekennzeichnet, dass** an mindestens einem Ballastelement ein Signalgeber angeordnet ist, von dem ein dem Ballast entsprechendes Signal an eine Empfangseinheit übertragbar ist.

11. Mobilkran nach Anspruch 10, **dadurch gekennzeichnet, dass** die Empfangseinheit in einem Bereich des Mobilkranchassis, auf dem das mindestens eine Gewicht ablegbar ist, integriert ist.

12. Mobilkran nach Anspruch 10, **dadurch gekennzeichnet, dass** die Empfangseinheit in einem Bereich des Kranauslegers, an den das mindestens eine Gewicht anhängbar ist, integriert ist.

13. Mobilkran nach einem der vorhergehenden Ansprüche, **dadurch gekennzeichnet, dass** an seinen Abstützfüßen jeweils mindestens ein Signalgeber angeordnet ist und dass am Fahrzeugchassis eine entsprechende Empfangseinheit angeordnet ist.

14. Mobilkran nach Anspruch 13, **dadurch gekennzeichnet, dass** an jedem Abstützfuß an vorbestimmten Positionen Signalgeber angeordnet sind, so dass durch die jeweilige Empfangseinheit die Position des Abstützfußes, d.h. diejenige des horizontal zum Fahrzeug ausfahrbaren Schiebeholmes und diejenige des vertikal ausfahrbaren Abstützfußes, eindeutig zugeordnet werden kann.

15. Mobilkran nach Anspruch 14, **dadurch gekennzeichnet, dass** an jedem Abstützfuß messbar ist, ob er unter Last ist.

16. Mobilkran nach einem der vorhergehenden Ansprüche, **dadurch gekennzeichnet, dass** an Rüstelementen, beispielsweise Gitterelementen eines Derrikauslegers, Signalgeber angeordnet sind.

17. Mobilkran nach Anspruch 16, **dadurch gekennzeichnet, dass** an den benachbarten Elementen Empfangseinheiten angeordnet sind.

18. Mobilkran nach Anspruch 16 oder 17, **dadurch gekennzeichnet, dass** an vorbestimmten Verbindungspunkten der Rüstelemente Verbindungselemente eines Bussystems angeordnet sind.

19. Mobilkran nach einem der Ansprüche 16 bis 18, **dadurch gekennzeichnet, dass** anhand der Rüstzustandsdaten seine geometrische Konfiguration bestimmbar ist.

20. Mobilkran nach einem der vorhergehenden Ansprüche, **dadurch gekennzeichnet, dass** ein mobiler Signalgeber mit einer Empfangseinheit, der an einer vorbestimmten Position am Mobilkran angeordnet ist, zusammenwirkt, um eine sichere Position einer Bedienperson zu erkennen und vorbestimmte Aktionen des Mobilkranes freizugeben.

## Claims

1. A mobile crane comprising a telescopic boom (12) which has a hinged section (14) and at least one telescopic section (16, 18) which can be telescoped out of it, or a crawler-mounted crane,
**characterized in that**,
as a position detection device, it has at least one transducer in the form of an inductively operating transponder (32, 50, 82), a receiver unit (34, 56, 60, 84) for the sensing of the position of the transducer, a control device for control in dependence on a signal of the receiver unit, as well as a signal transmission device in the form of a databus for the transmission of the signal data from the receiver unit to the control device.

2. A mobile crane in accordance with claim 1, wherein a transponder is fixedly installed in the receiver unit and transmits a pre-determined function signal for the continuous monitoring of the functioning of the position detection apparatus.

3. A mobile crane in accordance with either of claims 1 or 2, wherein it has at least one guy-rope as well as a rope length adjustment apparatus having a rope-holding apparatus for the adjustment of a desired rope length of the guy-rope, with the rope length adjustment apparatus having at least one transducer secured to the guy-rope whose position can be sensed by the receiver unit and with the control device controlling the rope-holding apparatus in dependence on a signal of the receiver unit.

4. A mobile crane in accordance with claim 3, wherein it has a guying for the telescopic boom which has at least one guy support supported at one of the sections, a guy-rope supported by the guy support as well as a rope length adjustment apparatus in accordance with the preceding claim.

5. A mobile crane in accordance with claim 4, wherein the receiver unit is arranged at the guy support.

6. A mobile crane in accordance with any one of the preceding claims, wherein a rope winch is provided for the hauling in of the guy-rope, is preferably arranged at the guy support and is controllable in dependence on the signal of the receiver unit.

7. A mobile crane in accordance with any one of the claims 3 to 6, wherein the rope winch forms the rope-holding device.

8. A mobile crane in accordance with any one of the claims 3 to 7, wherein the at least one transducer is integrated in a ring seated on the guy-rope.

9. A mobile crane in accordance with any one of the preceding claims, wherein two guy supports are provided which are spread apart in a V shape in an operating position and a guy-rope runs over each guy support, with transducers being secured at every guy-rope, preferably at rope sections respectively corresponding to equal rope lengths of the guy-ropes.

10. A mobile crane in accordance with any one of the preceding claims, wherein a transducer is arranged at least at one ballast element from which a signal corresponding to the ballast can be transmitted to a receiver unit.

11. A mobile crane in accordance with claim 10, wherein the receiver unit is integrated in a region of the mobile crane chassis on which the at least one weight can be placed down.

12. A mobile crane in accordance with claim 10, wherein the receiver unit is integrated in a region of the crane boom at which the at least one weight can be suspended.

13. A mobile crane in accordance with any one of the preceding claims, wherein at least one respective transducer is arranged at its stabilizer plates, and wherein a corresponding receiver unit is arranged at the vehicle chassis.

14. A mobile crane in accordance with claim 13, wherein transducers are arranged at each support plate at pre-determined positions such that the position of the stabilizer plate, i.e. the position of the sliding spar extensible horizontally to the vehicle and the position of the vertically extensible stabilizer plate, can be unambiguously associated by the respective receiver unit.

15. A mobile crane in accordance with claim 14, wherein it can be measured at every stabilizer plate whether it is under load.

16. A mobile crane in accordance with any one of the preceding claims, wherein transducers are arranged at setup elements, for example at lattice elements of a derrick boom.

17. A mobile crane in accordance with claim 16, wherein receiver units are arranged at the adjacent elements.

18. A mobile crane in accordance with either of claims 16 or 17, wherein connection elements of a bus system are arranged at pre-determined connection points of the setup elements.

19. A mobile crane in accordance with any one of the claims 16 to 18, wherein its geometrical configuration can be determined with reference to the setup condition data.

20. A mobile crane in accordance with any one of the preceding claims, wherein a mobile transducer cooperates with a receiver unit which is arranged at a pre-determined position on the mobile crane in order to detect a safe position of an operator and to release pre-determined actions of the mobile crane.

## Revendications

1. Grue mobile avec une flèche télescopique (12), qui présente un tronçon d'articulation (14) et au moins un tronçon télescopique (16, 18) télescopable de celui-ci, ou grue mobile sur chenilles, **caractérisée en ce qu'**elle comporte, en tant qu'installation de détection de position, au moins un capteur de signaux sous la forme d'un transpondeur à effet inductif (32, 50, 82), une unité de réception (34, 56, 60, 84) pour la détection de la position du capteur de signaux, une installation de commande pour la commande en fonction d'un signal de l'unité de réception, ainsi qu'une installation de transmission de signaux sous la forme d'un bus de données pour la transmission des données de signaux de l'unité de réception à l'unité de commande.

2. Grue mobile selon la revendication 1, **caractérisée en ce que** dans l'unité de réception, un transpondeur est installé solidement, qui émet un signal de fonctionnement prédéterminé pour la surveillance continue du fonctionnement du dispositif de détection de position.

3. Grue mobile selon la revendication 1 ou 2, **caractérisée en ce qu'**elle comporte au moins un câble d'haubannage ainsi qu'un dispositif de réglage de longueur de câble avec un dispositif de retenue de câble pour le réglage d'une longueur de câble souhaitée du câble d'haubannage, où le dispositif de réglage de longueur de câble présente au moins un capteur de signaux pouvant être fixé au câble d'haubannage dont la position peut être détecté par l'unité de réception, et où l'installation de commande commande le dispositif de retenue de câble en fonction d'un signal de l'unité de réception.

4. Grue mobile selon la revendication 3, **caractérisée en ce qu'**elle comporte un haubannage pour la flèche télescopique qui présente au moins un support d'haubannage logé à un des tronçons, un câble d'haubannage supporté par le support d'haubannage ainsi qu'un dispositif de réglage de longueur de câble selon la revendication précédente.

5. Grue mobile selon la revendication 4, **caractérisée en ce que** l'unité de réception est disposée au support d'haubannage.

6. Grue mobile selon l'une des revendications précédentes, **caractérisée en ce qu'**un treuil pour l'enroulement du câble d'haubannage est prévu, est disposé de préférence au support d'haubannage et peut être commandé en fonction du signal de l'unité de réception.

7. Grue mobile selon l'une des revendications 3 à 6, **caractérisée en ce que** le treuil constitue le dispositif de retenue de câble.

8. Grue mobile selon l'une des revendications 3 à 7, **caractérisée en ce qu'**au moins un capteur de signaux est intégré dans une bague se trouvant sur le câble d'haubannage.

9. Grue mobile selon l'une des revendications précédentes, **caractérisée en ce que** deux supports d'haubannage sont prévus, qui sont écartés dans une position de fonctionnement en forme de V, et sur chaque support d'haubannage passe un câble d'haubannage, où sont fixés à chaque câble d'haubannage des capteurs de signaux, de préférence à des tronçons de câble correspondant respectivement à des longueurs identiques des câbles d'haubannage.

10. Grue mobile selon l'une des revendications précédentes, **caractérisée en ce qu'**au moins à un élément de ballast, un capteur de signaux est disposé par lequel un signal correspondant au ballast peut être transmis à une unité de réception.

11. Grue mobile selon la revendication 10, **caractérisée en ce que** l'unité de réception est intégrée dans une zone du châssis de la grue mobile sur laquelle le au moins un poids peut être déposé.

12. Grue mobile selon la revendication 10, **caractérisée en ce que** l'unité de réception est intégrée dans une zone de la flèche de grue à laquelle le au moins un poids peut être accroché.

13. Grue mobile selon l'une des revendications précédentes, **caractérisée en ce qu'**à ses pieds de support, respectivement au moins un capteur de signaux est disposé, et **en ce qu'**au châssis de véhicule, une unité de réception correspondante est disposée.

14. Grue mobile selon la revendication 13, **caractérisée en ce qu'**à chaque pied de support, à des positions prédéterminées, des capteurs de signaux sont disposés, de sorte que par l'unité de réception respective, la position du pied de support, c'est-à-dire celle du longeron coulissant apte à être sorti horizontalement au véhicule et celle du pied de support apte à être sorti verticalement, peut être attribuée clairement.

15. Grue mobile selon la revendication 14, **caractérisée en ce qu'**on peut mesurer à chaque pied de support s'il est sous charge.

16. Grue mobile selon l'une des revendications précédentes, **caractérisée en ce que** des capteurs de signaux sont disposés à des éléments de construction, par exemple des éléments de grille d'une flèche Derrick.

17. Grue mobile selon la revendication 16, **caractérisée en ce que** des unités de réception sont disposées à des éléments avoisinants.

18. Grue mobile selon la revendication 16 ou 17, **caractérisée en ce que** des éléments de liaison d'un système bus sont disposés à des points de liaison prédéfinis des éléments de construction.

19. Grue mobile selon l'une des revendications 16 à 18, **caractérisée en ce qu'**à l'aide des données d'état de construction, sa configuration géométrique peut être définie.

20. Grue mobile selon l'une des revendications précédentes, **caractérisée en ce qu'**un capteur de signaux mobile coopère avec une unité de réception, qui est disposée à une position prédéterminée à la grue mobile, pour détecter une position sûre d'un opérateur et pour autoriser des actions prédéfinies de la grue mobile.
